(19) Europäisches Patentamt
European Patent Office
Office européen des brevets

(11) **EP 1 555 292 B1**

(12) **EUROPEAN PATENT SPECIFICATION**

(45) Date of publication and mention
of the grant of the patent:
**23.12.2015 Bulletin 2015/52**

(51) Int Cl.:
***C08L 23/04*** (2006.01)          ***C09D 123/04*** (2006.01)
***B32B 27/32*** (2006.01)

(21) Application number: **04000533.2**

(22) Date of filing: **13.01.2004**

(54) **EXTRUSION COATING POLYETHYLENE**

POLYETHYLEN FÜR EXTRUSIONSBESCHICHTUNG

POLYÉTHYLÈNE POUR LE REVÊTEMENT PAR EXTRUSION

(84) Designated Contracting States:
**AT BE BG CH CY CZ DE DK EE ES FI FR GB GR
HU IE IT LI LU MC NL PT RO SE SI SK TR**

(43) Date of publication of application:
**20.07.2005 Bulletin 2005/29**

(73) Proprietor: **Borealis Technology Oy
06101 Porvoo (FI)**

(72) Inventors:
• **Laiho, Erkki
  06450 Porvoo (FI)**
• **Vähälä, Martti
  37150 Nokia (FI)**
• **Sainio, Markku
  06100 Porvoo (FI)**

(74) Representative: **Kador & Partner
Corneliusstraße 15
80469 München (DE)**

(56) References cited:
**WO-A-00/71615      WO-A-01/62847
US-B1- 6 291 590     US-B1- 6 562 905
US-B1- 6 582 795**

**Description**

The present invention relates to a polymer composition suitable for extrusion coating and having good process properties for extrusion coating as for example low viscosity and a low neck-in by good mechanical properties and barrier properties, in particular, a low water vapor transition rate (WVTR). Additionally, the present invention relates to the process for producing the inventive composition and its use. Moreover, the present invention is related to a multi-layer material comprising the polymer composition as well as to a process of a multi-layer material and its use.

One of the largest and most rapidly growing polyolefin processing method is extrusion coating. The largest single volume of coated materials are different papers and paperboards, which are used for a variety of packaging applications. Other materials frequently coated are polymer films, cellophane, aluminum foil, freezer wrap paper and fabrics of various kinds. These substrates can be classified into two general types which require considerably different conditions. The first type of substrates to coat are the relative rough and porous materials like liquid packaging boards and other similar materials. Basically, polyolefins bond to such materials by penetrating the surface slightly and interlocking mechanically with the substrate. The bonding may be improved by different oxidation treatments of the plastic, like flame treatment, corona treatment or ozone treatment. This allows a formation of a chemical bond between the coating and the substrate. The other type of substrates are cellophanes or aluminum foils. Here no mechanical bond is possible so that chemical adhesion must be developed. The non-polar nature of polyolefins gives it little chemical attraction to these substrates. However, temperature and exposure to oxygen promote the formation of oxidation products which do adhere well.

In any case, the used polymer extrusion material must have a relative low viscosity to extrusion coat substrates as mentioned above. Low density polyethylene (LDPE) made by high-pressure polymerization of ethylene with free radical initiators as well as linear low density polyethylene (LLDPE) made by the copolymerisation of ethylene and α-olefins with conventional Ziegler coordination catalysts at low to intermediate pressures allow excellent extrusion possibility and a high extrusion draw down rates.

"Draw down" is stretching or elongating a molten polymer extruded (web or filament) in the machine direction and occasionally (simultaneously to a lesser degree) also in the transverse direction.

On the other hand the low density polyethylene extrusion compositions lack sufficient toughness for many applications. Moreover, even though these compositions have good barrier properties, in particular, acceptable water vapor transmission rates (WVTR), there are applications which require even better resistance towards water vapor transmission.

Moreover, these products have inadequate stiffness which is a demanding requirement for new multi-layer materials.

From the high density polyethylene it is known that they are relatively resistant to stress cracking, i.e. they have improved mechanical properties. Moreover, the barrier properties are significantly better compared to the low density polyethylenes. These requirements are especially demanded in food packaging (i.e. juice cartons) where the coating should have a low water vapor transmission rate (WVTR) to protect the paper substrate.

Moreover, in some multi-layer coatings polyvinyl alcohol or a saponified copolymer of ethylene and vinyl alcohol (EVOH) is used as an oxygen barrier layer. These polymers are moisture sensitive and need a protective layer having a low water vapor transmission rate (WVTR). For this reason olefin polymers are well suited for this purpose.

Moreover, the draw resonance phenomenon has to be born in mind. Draw resonance occurs in linear low density polyethylenes (LLDPE) as well as in high density polyethylenes (HDPE) during extrusion coating. "Draw resonance" can be described as a sustained random and/or periodic oscillation, variation or pulsation of the polymer melt with respect to the velocity and cross-sectional area of melt drawing process that occurs between the die and the take-off position when the boundary conditions are a fixed velocity at the die and a fixed velocity at the take-off position. The "take-off position" can be described as the contact point (either the top or bottom) of a roller device that draws or pulls the molten extrudate down from its initial thickness instantaneous at the die exit to its final thickness. The roller device can be nip roll, rubber role, a chill role, combinations therefore or the like constructed from metal or rubber with various surfaces such as polished, matt or embossed finishes. Draw resonance occurs when the draw ratio (that is the molten velocity at take-off divided by the melt velocity instantaneous at the die exit which is often approximated by dividing the reciprocal of the final polymer thickness by reciprocal of the thickness of the melt instantaneous at the die exit) exceeds a polymer specific critical value. Draw resonance is a melt flow instability that is manifested as irregularities in the final coating, film or fiber dimensions and often produce widely variable thicknesses and widths. When line speed significantly exceeds the speed of onset, draw resonance can cause web or filament breaks and thereby shut down the entire drawing or converting process.

Another problem for the linear polymers is that they have a high neck-in, which is defined as the difference of the die width and the width of the extrudate at the take-off position, which is equal to the width of the coating in the coated article.

Therefore, there is a special demand to have a polymer extrusion composition fulfilling all the above stated requirements.

WO 98/30628 discloses the use of a linear bimodal polyethylene with a melt flow rate $MFR_2$ of 9 to 13 g/10min and a density of 930 to 942 kg/m$^3$ in extrusion coating. However, this product is a linear low density polyethylene (LLDPE) which does not have the stiffness and water vapor transmission rate (WVTR) comparable to high density polyethylene (HDPE).

In EP 792318 also a low density polyethylene composition is described, whereby a blend is used of a uni-modal linear low density polyethylene (LLDPE) and a bimodal low density polyethylene (LDPE) having a density of at least 916 g/m$^3$ and a melt index of less than 6.0 g/10min.

WO 00/71615 refers to the use of a bimodal high density polyethylene (HDPE) with a melt flow rate $MFR_2$ of 5g/10min and a density of 957kg/m$^3$ in extrusion coating. However, high density polyethylenes (HDPE) are susceptible to draw resonance what is detrimental in extrusion coating.

WO 01/62847 A and US 6,582,795 B also relate to bimodal polyethylene.

It is therefore an object of the present invention to provide a polymer composition suitable for extrusion coating which has a high resistance to draw resonance and reduced neck-in in combination with good mechanical properties, especially, a good stress crack resistance and a low water vapor transmission rate. Moreover, the object of the present invention is to provide a process to the inventive polymer composition. Additionally, it is a further object of the present invention to provide a multi-layer material comprising the inventive polymer composition as well as a process thereto.

The present invention is based on the finding that the object can be addressed by a polymer extrusion composition comprising a multimodal high density polyethylene (HDPE) and a further polyethylene with a lower density than a HDPE.

The present invention provides therefore a polymer composition according to claims 1 to 27 comprising

(a) a multimodal high density polyethylene (A) having a density of 950 to 968 kg/m$^3$; and

(b) a low density polyethylene (B), wherein the composition has a density of 930 to 950 kg/m$^3$ (ISO 1183-1987).

This inventive composition is characterized by a high resistance to draw resonance and reduced neck-in and additionally having a very good water vapor transmission rate. This result is surprisingly achieved by combining polyethylene (A) with polyethylene (B).

The first requirement of polyethylene (A) is that it is multimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in series, and using different conditions in each reactor, the different polymer fractions produced in the different reactors will each have their own molecular weight distribution which may considerably differ from one another. The molecular weight distribution curve of the resulting final polymer can be looked at a superimposing of the molecular weight distribution curves of the polymer fractions which will accordingly show two or more distinct maxima, or at least be distinctively broadened compared with the curves for individual fractions.

A polymer showing such a molecular weight distribution curve is called "bimodal" or "multimodal", respectively.

The multimodal polyethylene (A) is preferably a bimodal polyethylene (A).

Multimodal polymers can be produced according to several processes which are described, e.g. in WO 92/12182 and WO 97/22633.

The multimodal polyethylene (A) is preferably produced in a multistage process in a multistage reaction sequence such as described in WO 92/12182.

It is previously known to produce multimodal, in particular, bimodal olefin polymers such as multimodal polyethylene, in two or more reactors connected in series.

According to the present invention, the main polymerization stages are preferably carried out as a combination of a slurry polymerization/gas-phase polymerization. The slurry polymerization is preferably performed in a so called loop-reactor.

In order to produce the inventive composition possessing improved properties, a flexible method is required. For that reason it is preferred that the composition be produced in two main polymerization stages in combination of loop-reactor/gas-phase reactor.

Optionally, and of more advantage, the main polymerization stages may be preceeded by a pre-polymerization in which case up to 20 % by weight, preferably 1 to 10 % by weight, more preferably 1 to 5 % by weight of the total amount of polymer is produced. At the pre-polymerization point, all of the catalyst, is preferably charged into a loop-reactor and a pre-polymerization is performed as a slurry polymerization. Such a pre-polymerization leads to less fine particles being produced in the following reactors and to a more homogenous product being obtained in the end. Such a prepolymerization is for instance described in WO 96/18662.

Generally, the technique results in multimodal polymer mixture through polymerization with the aid of a Ziegler-Natta or metallocene catalyst in several successive polymerization reactors. In the production for example a bimodal linear high density polyethylene (A) a first ethylene polymer is produced in a first reactor under certain conditions with respect to the hydrogen/gas-concentration, temperature, pressure and so forth. After the polymerization the reactor polymer including the catalyst is separated from the reaction mixture and transferred to a second reactor, where further polymerization takes place under other conditions.

A preferred catalyst is described in the document EP 0688794 B1. It is a high activity procatalyst comprising a particular inorganic support, a chlorine compound deposited on the support, wherein the chlorine compound is the same as or different from the titanium compound, whereby the inorganic support is contacted with an alkyl metal chloride which is soluble in a non-polar hydrocarbon solvent, and has the formula $(R_nMeCl_{3-n})_m$ wherein R is a $C_1$-$C_{20}$ alkyl group, Me is a metal of group III(13) of the periodic table, n = 1 or 2 and m = 1 or 2, to give a first reaction product, and the first reaction product is contacted with a compound containing hydrocarbyl and hydrocarbyl oxide linked to magnesium which is soluble in non-polar hydrocarbon solvents, to give a second reaction product, and the second reaction product is contacted with a titanium compound which contains chlorine, having the formula $Cl_xTi(OR^{IV})_{4-x}$ wherein $R^{IV}$ is a $C_2$-$C_{20}$ hydrocarbyl group and x is 3 or 4, to give the procatalyst. Preferred supports are inorganic oxides, more preferably silicon dioxide or silica. Most preferably silica having an average particle size of 20 $\mu$m is used. Even more preferred triethylaluminum as a cocatalyst is used.

Preferably, the first polymer of high melt flow rate and low molecular weight (LMW) is produced with a minor or no addition of comonomer in a first reactor, whereas a second polymer of low melt flow rate and high molecular weight (HMW) is produced with addition or no addition of comonomer in the second reactor.

The resulting end product consists of an intimate mixture of polymers from the two reactors, the different molecular weight distribution occurs of these polymers together forming a molecular weight-distribution curve having a broad maximum or two maxima, i.e. the end product is bimodal polymer mixture. Since multimodal and, in particular, bimodal ethylene polymers and the production thereof belong to the prior art, no detailed description is called for here, but reference is made to the above mentioned WO 92/12182. It will be noted that the order of the reaction stages may be reversed.

Preferably, as stated above, the multimodal polyethylene (A) according to the invention is a bimodal polymer mixture. It is also preferred that this bimodal polymer mixture has been produced by polymerization as described above under different polymerization conditions in two or more polymerization reactors connected in series.

As it becomes evident from the definition above, the multimodal polymer comprises at least two fractions, whereby one fraction corresponds to a lower molecular weight than the other fraction which has a higher molecular weight.

A further requirement for the polyethylene (A) is that it is a high density polyethylene. In general, a high density polyethylene is a thermoplastic polyolefin with a density of 941 to 968 kg/m³. The density of the polyethylene (A) is 950 to 968 kg/m³, more preferably 950 to 965 kg/m³ and most preferably 955 to 965 kg/m³. The density is determined according to ISO 1183-187.

Furthermore, and according to this invention the wording "high density" implicitly indicates that polyethylene (A) has to be preferably linear. A "liner polyethylene" is a polymer whose molecules are arranged in a chain-like fashion with few long chain branches or bridges between the chains. More precisely, a linear polymer has only few such branching points, i.e. preferably less than 7 per 1000 carbon atoms. The branching points can be detected by $^{13}$C-NMR-spectros-copy.

Therefore, a linear polymer according to this invention, is a polymer having long chain branches less than 7 per 1000 carbon atoms in the polymer backbone.

In turn, a side-chain is a "long side-chain" when it has at least 6 carbon atoms. The number of carbon atoms of a side-chain can be determined by $^{13}$C-NMR-spectroscopy. However, when no effect on the rheological behavior is achieved, then the polymer cannot be regarded as long chain branched. Therefore, a polymer with "long side-chains" must also show strong shear thinning, i.e. a shear thinning index $SHI_{0/100}$ of 11 to 35.

Therefore, a polymer according to this invention, is linear when it has side-chains with less than 6 carbon atoms and/or it has side-chains with at least 6 carbon atoms but a $SHI_{0/100}$ of less than 11. Moreover, a polymer according to this invention, is regarded as "linear" when it has some long side chains as defined above but less than 7 per 1000 carbon atoms in the polymer backbone.

As a consequence of this linearity, the polymer is well packed and has a high density, i.e. is a high density polyethylene (HDPE).

The molecular weight distribution (MWD) of the multimodal linear high density polyethylene (A) is further characterized by the way of its melt flow rate (MFR) according to ISO 1133 at 190 °C. The melt flow rate is mainly depending on the average molecular weight. This is because long molecules give the material a lower flow tendency than short molecules.

An increase in molecular weight means a decrease in the MFR-value. The melt flow rate (MFR) is measured in g/10min of the polymer discharged under specific temperature and pressure conditions and is a measure of the viscosity of a polymer which in turn for each type of polymer is mainly influenced by its molecular weight distribution, but also by its degree of branching. The melt flow rate measured under a load of 2.16 (ISO 1133) is denoted as $MFR_2$. In turn, the melt flow rate measured with 5 kg load is denoted as $MFR_5$.

It is preferred that the melt flow rate $MFR_2$ of the polyethylene (A) is higher than 5 g/10min, more preferably 5 to 20 g/10min, still more preferably 7 to 15 g/10min. If the melt flow rate (MFR) of the polyethylene (A) is lower than 5 a high throughput is not reached. On the other hand, if the melt flow rate $MFR_2$ is higher than 20 g/10min the melt strength of the polymer suffers in most cases unacceptably. In addition, it is preferred that the polyethylene (A) has a melt flow rate $MFR_5$ of 20 to 40 g/10min.

Moreover, it is preferred that the flow rate ratio, which is a ratio of two melt flow rates measured for the same polymer under two different loads, falls within a specific range. The preferred specific range is 2.5 to 4.5, more preferably 2.7 to 4.0, for the flow rate ratio $MFR_5/MFR_2$.

The number average molecular weight ($M_n$) is an average molecular weight of a high polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

The number average molecular weight and the weight average molecular weight as well as the molecular weight distribution are determined by size exclusion chromatography (SEC) using Waters Alliance GPCV2000 instrument with online viscometer. The oven temperature is 140 °C. Trichlorbenzene is used as a solvent.

It is preferred that the polyethylene (A) has a weight average molecular weight ($M_w$) from 50000 to 150000 g/mol, more preferably from 60000 to 100000 g/mol.

A further characteristic of the molecular weight distribution (MWD) which is the relation between the number of molecules in a polymer and their individual chain length has to be considered. The width of the distribution is a number as a result of the ratio of the weight average molecular weight divided by the number average molecular weight ($M_w/M_n$). In the present invention it is preferred that the polyethylene (A) has a $M_w/M_n$ of preferably 4.5 to 25, more preferably 5 to 15.

Preferably, the polyethylene (A) comprises ethylene homopolymer and/or ethylene copolymer. In case ethylene copolymer is present then the copolymer comprises ethylene and at least one $C_3$-$C_{20}$ α-olefin, more preferably $C_4$-$C_{10}$ α-olefin. Especially preferred are α-olefins selected from the group consisting of propylene, 1-butene, 1-pentene, 4-methyl-1-pentene, 1-hexene, 1-heptene, 1-octene, 1-nonene, 1-decene, 6-methyl-1-heptene, 4-ethyl-1-hexene, 6-ethyl-1-octene and 7-methyl-1-octene. Still more preferred α-olefins are selected from the group consisting of 1-butene, 4-methyl-1-pentene, 1-hexene and 1-octene.

As one requirement of the composition is that the used polyethylene (A) is a high density polyethylene (HDPE), the content of the comonomer units in the polymer is preferably 0.1 to 1.0 % by mol, more preferably 0.15 to 0.5 % by mol.

It is preferred that polyethylene (A) comprises a low molecular weight fraction (LMW) and a high molecular weight fraction (HMW). The terms "low molecular weight" and "high molecular weight" mean that the high molecular weight fraction (HMW) has a higher molecular weight than the low molecular weight fraction (LMW). Therefore, it is more preferred that the low molecular weight fraction (LMW) has a weight average molecular weight of 10000 to 60000 g/mol, more preferred from 20000 to 50000 g/mol and the high molecular weight fraction (HMW) has more preferably a weight average molecular weight from 80000 to 300000 g/mol and still more preferably from 100000 to 200000 g/mol.

Preferably, the low molecular weight fraction (LMW) has a melt flow rate of $MFR_2$ from 100 to 2000 g/10min, more preferably from 250 to 1.000 g/10min.

In addition, it is preferred that the low molecular weight fraction (LMW) has a density of at least 971 kg/m³, more preferably of at least 973 kg/m³.

The low molecular weight fraction (LMW) can be preferably ethylene homopolymer or ethylene copolymer. However, it is preferred that the low molecular weight fraction (LMW) is a homopolymer.

The expression "ethylene homopolymer" used herein relates to an ethylene polymer that substantially consists, i.e. to at least 97 % by weight, preferably at least 99 % by weight, more preferably at least 99.5 % by weight and most preferably at least 99.8 % by weight of ethylene units and, thus, is an ethylene polymer which preferably only includes ethylene monomer units.

Moreover, it is preferred that the comonomer content in the low molecular weight fraction (LMW) is lower than 0.2 % by mol, more preferably lower than 0.1 % by mol and most preferred less than 0.05 % by mol

The high molecular weight fraction (HMW) can be preferably an ethylene homopolymer or an ethylene copolymer. However, it is preferred that the high molecular weight fraction (HMW) is an ethylene copolymer. The ethylene copolymer preferably comprises ethylene and at least one $C_3$-$C_{20}$ α-olefin, more preferably $C_4$-$C_{10}$ α-olefin. The most preferred α-olefins are selected from the group consisting of propylene, 1-butene, 1-pentene, 4-methyl-1-pentene, 1-hexene, 1-heptene, 1-octene, 1-nonene, 1-decene, 6-methyl-1-heptene, 4-ethyl-1-hexene, 6-ethyl-1-octene and 7-methyl-1-octene. Still more preferred α-olefins are selected from the group consisting of 1-butene, 4-methyl-1-pentene, 1-hexene, and 1-octene.

Furthermore, it is preferred that the comonomer content in a high molecular weight fraction (HMW) is 0.2 to 2.0 % by mol, more preferably from 0.3 to 1.0 % by mol.

Additionally, it is preferred that the polyethylene (A) comprises preferably 40 to 60 % by weight, more preferably 49 to 55 % by weight of a low molecular weight fraction (LMW) and preferably 60 to 40 % by weight, more preferably 51 to 45 % by weight of a high molecular weight fraction (HMW).

As a further requirement the polyethylene (B) has to be a low density polyethylene. A low density polyethylene is a thermoplastic polymer with a density of 910 to 940 kg/m$^3$. However, it is more preferred that the polyethylene has a density of 910 to 935 g/m$^3$ and most preferred from 915 to 930 g/m$^3$. The density is determined according to ISO 1183-1987.

In contrast to the high density polyethylene (A), which preferably has a few branching points, the low density polyethylene (B) is preferably a highly branched polymer with preferably more than 60 branching points per 1000 carbon atoms.

"Branched" means that a polyethylene has side chains. A "side chain" is a grouping of similar atoms (two or more, generally carbons as in the ethyl radical) that branches from the backbone (straight chain) of a polymer.

Preferably, the polyethylene (B) is long chain branched. "Long side-chain" stands, according to this invention, for the fact that the side-chain can be detected by $^{13}$C-NMR-spectroscopy and additionally shows effect on the rheological behavior.

As stated above, one effect of linearity is that the side chain has less than 6 carbon atoms. Hence, a "long side-chain" requires at least 6 carbon atoms. However, when no effect on the rheological behavior is achieved, the polymer cannot be regarded as long chain branched. Therefore, polymers with "long side-chains" must also show strong shear thinning, i.e. a shear thinning index $SHI_{0/100}$ of 11 to 35.

More specifically, "long side-chain" preferably stands for a side-chain with at least 6 carbon atoms, more preferably at least 100 carbon atoms but also other atoms without limiting amount can be present. The atoms can be anything from the periodic table of the second to fourth row without the elements of the zero group, the first group, the second group and the eight group, respectively. It is preferred that the atoms are selected from the group consisting of C, N, O, S, P, Cl, F, I, Br and Si. The most preferred atom is C. However, this does not mean that that the atoms forming the side chain cannot have residues. Therefore, it is preferred that the atom "C" has, as a residue, hydrogen. Moreover, preferred "side chains" are alkyl groups but not limited to it. Still more preferred side chains are $C_5$-$C_{200}$ alkyl groups, more preferably $C_5$-$C_{20}$ alkyl groups, or ethers or esters of the $C_5$-$C_{200}$ alkyl residues. Most preferred side chains are reaction products of ethylene and/or acrylates as defined below.

Moreover, long chain branches are normally formed as a product of chain transfer to the polymer, as well as different chain termination reactions in free radical polymerization reactions. Hence, depending on the circumstance if comonomers are additionally used, the side chain comprises ethylene only or also comonomers.

Further, it is preferred that the polyethylene (B) has a melt flow rate $MFR_2$ of 3 to 15 g/10min, more preferably of 6 to 15 g/10min and most preferably of 6 to 10g/10min.

The polyethylene (B) can be ethylene homopolymer and/or ethylene copolymer. However, it is preferred that the polyethylene (B) is an ethylene homopolymer.

The expression "ethylene homopolymer" used herein relates to an ethylene polymer that consists substantially, i.e. to at least 97 % by weight, preferably at least 99 % by weight, more preferably at least 99.5 % by weight and most preferably at least 99.8 % by weight of ethylene units and, thus, is an ethylene polymer which preferably only includes ethylene monomer units.

In case the polyethylene (B) is a copolymer, the polyethylene (B) preferably comprises ethylene and at least one component selected from the group consisting of vinyl acetate, vinyl acrylate, vinyl meth-acrylate, ethyl acrylate, methyl acrylate and butyl acrylate.

Preferably, the inventive composition comprises 40 to 99 % by weight polyethylene (A) and 1 to 60 % by weight of polyethylene (B). Additionally, the inventive polymer composition may contain up to 40 %, preferably up to 20 %, more preferably up to 10 % by weight of the total composition other polymers, fillers and additives known in the art. Especially, the other polymers are preferably contained in an amount of up to 20 % by weight, more preferably up to 10 % by weight of the total composition.

The inventive polymer composition has preferably a density of 930 to 950 kg/m$^3$, more preferably 933 to 947 kg/m$^3$.

Moreover, it is preferred that the inventive polymer composition has a melt flow rate $MFR_2$ of preferably 5 to 20 g/10min, more preferably of 5 to 15g/10min.

Additionally, it is preferred that the invention polymer composition has preferably a crystallinity of 45 % to 65 % and most preferably of 50 % to 60 %, measured according to ISO 11357.

Preferably the polyethylene (B) is produced by a stirred autoclave process at almost constant temperature, pressure, free radical concentration, and ratio of monomer to polymer in a well-agitated continuous autoclave as described in US 2897183. US 2897183 is herewith included by reference. In general, the reaction is started by heating ethylene and initiator to the initiation temperature by an external preheater or internal heater, or by heating jackets on the autoclave. After polymerization begins and the temperature rises to the desired value, heating is discontinued and the temperature is maintained by controlling the amount of initiator fed to the reactor. It is important that intense agitation throughout the autoclave is maintained for uniform temperature and initiator concentration throughout the reactor. The maximum temperature differential in the autoclave shall not exceed 5 °C.

In extrusion coating it is of advantage that the adhesion properties of the resin used are improved. This can be reached by oxidation of the resin during the coating process. Hence, it is preferred that the inventive polymer composition contains less than 2000 ppm, more preferably less than 1000 ppm and most preferably not more than 700 ppm of antioxidants and/or process stabilizers. The antioxidants may be selected from those known in the art, like those containing hindered phenols, secondary aromatic amines, thioethers or other sulphur containing compounds, phosphites and the like including their mixtures.

Preferably, the coatings made of the inventive composition has a low water vapor transmission rate (WVTR). Hence, it is preferred that the WVTR is lower than 15.4 g/m$^2$/24h, more preferably lower than 15g/m$^2$/24h for a coating having a coating weight of 20g/m$^2$. The water vapor transmission rate is measured at 90 % relative humidity and 38 °C temperature according to the method ASTM E96.

Moreover, it is preferred that the inventive composition has a neck-in of not more than 140 mm, preferably not more than 135 mm in an extrusion coating process operating at draw down speed of 200 m/min, coating weight of 10g/m$^2$ and die width of about 900 mm.

The present invention provides also a process for producing the inventive composition as described above.

Preferably, the process for producing the inventive composition comprises the production of the polyethylene (A) in a multistage process comprising a loop-reactor and a gas-phase reactor wherein the low molecular weight fraction (LMW) is generated in at least one loop-reactor and the high molecular weight fraction (HMW) is generated in a gas-phase reactor and the polyethylene (B) is produced by a free radical polymerization in a high pressure autoclave process preferably as described above. Subsequently, the polyethylene (A) and polyethylene (B) are blended together and compounded by using an extruder.

The preferred used catalyst is the catalyst system as described in document EP 0688794 B1 which is included herewith by reference. The catalyst is in particular a high activity pro-catalyst comprising a particulate inorganic support, a chlorine compound deposited on the support, wherein the chlorine compound is the same as or different from the titanium compound, whereby the inorganic support is contacted with an alkyl metal chloride which is soluble in non-polar hydrocarbon solvents and has the formula $(R_nMeCl_{3-n})_m$ wherein R is a $C_1$-$C_{20}$ alkyl group, Me is a metal of group III(13) of the periodic table, n = 1 or 2 and m = 1 or 2, to give a first reaction product, and the first reaction product is contacted with a compound containing hydrocarbyl and hydrocarbyl oxide linked to magnesium which is soluble in non-polar hydrocarbon solvents, to give a second reaction product, and the second reaction product is contacted with a titanium compound which contains chlorine, having the formula $ClxTi(OR^{IV})_{4-x}$ wherein $R^{IV}$ is a $C_2$-$C_{20}$ hydrocarbyl group and x is 3 or 4, to give the procatalyst. Preferred supports are inorganic oxides, more preferably silicon dioxide or silica. Most preferably silica having an average particle size of 20 $\mu$m is used. Even more preferred triethylaluminum as a cocatalyst is used.

In particular, a multistage process is used as described above. Especially, it is preferred that a loop-reactor is operated at 75 to 110 °C, more preferably in the range of 85 to 100 °C and most preferably in the range of 90 to 98 °C. Thereby, the pressure is preferably 58 to 68 bar, more preferably 60 to 65 bar.

Preferably, the low molecular weight fraction is pre-polymerized in a first loop-reactor and then continuously removed to a second loop-reactor where the low molecular weight fraction is further polymerized. It is preferred that the temperature in the second loop-reactor is 90 to 98 °C, more preferably about 95 °C. Thereby, the pressure is preferably 58 to 68 bar, more preferably about 60 bar.

In addition, it is preferred that in the second loop-reactor the ethylene concentration is 4 to 10 % by mol, more preferably 5 to 8 % by mol and most preferably about 6.7 % by mol.

The hydrogen to ethylene mol ratio highly depends on the catalyst used. It must be adjusted to render the desired melt flow rate MFR of the polymer withdrawn from the loop reactor. For the preferred catalyst as described in the description it is preferred that the ratio of hydrogen to ethylene is 100 to 800 mol/kmol, more preferably 300 to 700 mol/kmol, still more preferably 400 to 650 mol/kmol and most preferred about 550 mol/kmol.

The polymer slurry is then preferably removed from the loop-reactor by using settling lacks and is then preferably introduced into a flesh vessel operating preferably at about 3 bar pressure where the polymer is separated from most of the fluid phase. The polymer is then preferably transferred into a gas-phase reactor operating preferably at 75 to 95 °C, more preferably 80 to 90 °C and most preferably about 85 °C, and at preferably 10 to 40 bar, more preferably 15 to 25 bar and most preferably about 20 bar.

Additionally, ethylene, comonomers when used and hydrogen as well as nitrogen as an inert gas are preferably introduced into the reactor so that the fraction of ethylene in the fluidization gas is preferably 1 to 10 % by mol, more preferably 1 to 5 % by mol and most preferably about 2.5 % by mol and the ratio of hydrogen to ethylene is preferably 100 to 400 mol/kmol, more preferably 150 to 300 mol/kmol and most preferably about 210 mol/kmol.

The comonomer to ethylene ratio has influence on the desired density of the bimodal polymer. Hence, it is preferred that the ratio of comonomer to ethylene is 20 to 150 mol/kmol, more preferably 50 to 100 mol/kmol and most preferred about 80 mol/kmol. Preferably, afterwards the polymer is withdrawn from the gas-phase reactor and then mixed with further additives as antioxidants and/or process stabilizers, if needed.

The polyethylene (A) and polyethylene (B) may then be blended with any suitable method known in the art. These methods include compounding in a twin screw extruder, like a counterrotating twin screw extruder or a corotating twin screw extruder and compounding in a single screw extruder.

The present invention also relates to a multi-layer material comprising the inventive polymer composition.

A multi-layer material according to this invention comprises

(a) a substrate as a first layer

(b) a polymer composition as defined above as at least a further layer.

It is further preferred that the multi-layer material is a two-layer material consisting of a substrate as a first layer and of a polymer composition as defined above as a second layer. Optionally, this multi-layer material comprises adhesion promoters as tetra iso-propyl titanate, tetra stearyl titanate, tetrakis (2-ethylhexyl) titanate, poly(dibutyl titanate).

Preferably, the substrate is selected from the group consisting of paper, paperboard, aluminum film and plastic film.

The present invention also comprises a process for producing a multi-layer material as described above, whereby the polymer composition as defined above is applied on the substrate by a film coating line comprising an unwind, a wind, a chill roll and a coating die.

Moreover, the present invention is related to the use of the polymer composition as defined above for extrusion coating.

More preferably, the polymer composition as defined above is used for extrusion coating producing a multi-layer material as described above.

In the following, the present invention is demonstrated by means of examples.

## **Examples:**

Measurements:

WVTR:

Water vapor transmission rate was measured at 90 % relative humidity and 38 °C temperature according to the method ASTM E96.

Basis weight or coating weight:

Basis weight (or coating weight) was determined as follows: five samples were cut off from the extrusion coated paper parallel in the transverse direction of the line. The size of the samples was 10 cm x 10 cm. The samples were dried in an oven at 105 °C for one hour. The samples were then weighed and the coating weight was calculated as the difference of the basis weight of the coated structure and the basis weight of the substrate. The result was given as a weight of the plastic per square meter.

Molecular weight averages and molecular weight distribution:

Molecular weight averages and molecular weight distribution were determined by size exclusion chromotogtaphy (SEC) using Water Alliance GPCV2000 instrument with on-line viscometer. Oven temperature was 140 °C. Trichlorbenzene was used as a solvent.

Crystallinity

Crystallinity was determined by Differential Scanning Calorimetry according to ISO 11357. The instrument was Mettler DSC-30. The sample was purged with nitrogen, heated from 30 °C to 180 °C with a rate of 50 °C/min, then cooled to 0 °C with a rate of 10 °C/min and finally heated again to 180 °C with a rate of 10 °C/min..

Density:

Density was determined according to ISO 1183-1987.

Melt flow rate or melt index:

Melt flow rate (also referred to as melt index) was determined according to ISO 1133, at 190 °C. The load used in the measurement is indicated as a subscript, i.e. $MFR_2$ denotes the MFR measured under 2.16 kg load.

Flow rate ratio:

Flow rate ratio is a ratio of two melt flow rates measured for the same polymer under two different loads. The loads are indicated as a subscript, e.g. $FRR_{5/2}$ denotes the ratio of $MFR_5$ to $MFR_2$.

Neck-in:

Neck-in is measured as the difference between the width of the die and the width of the polymer coating on the substrate.

Draw resonance:

Draw resonance was measured as the standard deviation of the coating weight on the substrate.

Edge weaving:

Edge weaving was measured as the difference between the maximum and minimum width of the coating (in mm).

Minimum coating weight:

Minimum coating weight was the minimum weight of the coating that could be obtained at the coating speed of 400 m/min without significant draw resonance.

Rheology:

Rheology of the polymers was determined using Rheometrios RDA II Dynamic Rheometer. The measurements were carried out at 190 C° under nitrogen atmosphere. The measurements gave storage modulus (G') and loss modulus (G") together with absolute value of complex viscosity ($\eta$*) as a function of frequency ($\omega$) or absolute value of complex modulus (G*)

$$\eta* = \sqrt{(G'^2 + G''^2)}/\omega$$

$$G* = \sqrt{(G'^2 + G''^2)}$$

According to Cox-Merz rule complex viscosity function, $\eta$* ($\omega$) is the same as conventional viscosity function (viscosity as a function of shear rate), if frequency is taken in rad/s. If this empirical equation is valid absolute value of complex modulus corresponds to shear stress in conventional (that is steady state) viscosity measurements. This means that function $\eta$ *(G') is the same as viscosity as a function of shear stress.

In the data the viscosity at a low shear stress or $\eta$ * at a low G* (which serve as an approximation of so called zero shear rate viscosity) was used as a measure of average molecular weight. On the other hand, shear thinning, that is the decrease of viscosity with G*, gets more pronounced the broader is the molecular weight distribution. This property can be approximated by defining a so-called shear thinning index, SHI, as a ratio of viscosities at two different shear stresses. In the examples below the shear stresses (or $G^*_{)}$ 1 and 100 kPa were used. Thus:

$$SHI_{1/100} = \eta*_1 / \eta*_{100}$$

where

$\eta*_1$ is complex viscosity at $G* = 1$ kPa

$\eta*_{100}$ is complex viscosity at $G* = 100$ kPa

As mentioned above storage modulus function, $G'(\omega)$ and loss modulus function $G*(\omega)$, were obtained as primary functions from dynamic measurements. The value of the storage modulus at a specific value of loss modulus increases with broadness of molecular weight distribution. However this quantity is highly dependent on the shape of molecular weight distribution of the polymer. The principles of Rheology are well known and laid down inter alia in "RHEOLOGY, Principles, Measurements and Applications by Christopher W. Macosko, VCH, 1994". This document is included herewith by reference.

Example 1:

Into a 50 $dm^3$ loop reactor, operated at 80 °C and 65 bar, was introduced 1 kg/h ethylene, 22 kg/h propane, 2 g/h hydrogen and a polymerisation catalyst prepared according to Example 3 of EP-B-688794, except that as a support was used silica having an average particle size of 20 $\mu$m, together with triethylaluminium co-catalyst in such a quantity that the production rate of polyethylene was 6.8 kg/h. The molar ratio of the aluminium of the co-catalyst to the titanium of the solid catalyst component was 30. The melt index $MFR_2$ and the density of the polymer were estimated to be 30 g/10 min and 970 $kg/m^3$, respectively.

The slurry was continuously removed from the loop reactor and introduced into a second loop reactor having a volume of 500 $dm^3$ and operating at 95 °C temperature and 60 bar pressure. Additional ethylene, propane and hydrogen were added so that the ethylene concentration was 6.7 % by mole and the ratio of hydrogen to ethylene was 550 mol/kmol. The polymer production rate was 27 kg/h and the $MFR_2$ and density of the polymer were 400 g/10min and 974 $kg/m^3$, respectively.

The polymer slurry was removed from the loop reactor by using settling legs and was then introduced into a flash vessel operating at 3 bar pressure, where the polymer was separated from most of the fluid phase. The polymer was then transferred into a gas phase reactor operating at 85 °C and 20 bar. Additional ethylene, 1-butene comonomer and hydrogen, as well as nitrogen as inert gas, were introduced into the reactor so that the fraction of ethylene in the fluidisation gas was 2.5 % by mole and the ratios of hydrogen to ethylene and 1-butene to ethylene were 210 and 80 mol/kmol, respectively. The copolymer production rate in the gas phase reactor was 25 kg/h.

The polymer withdrawn from the gas phase reactor was then mixed with 400 ppm Irganox B561 (mixture of antioxidant and process stabilizer manufactured and marketed by Ciba) and pelletised by using a corotating twin screw extruder ZSK70 manufactured by Wemer and Pfleiderer. The melt temperature was 199 °C during the extrusion. The polymer melt was extruded through a die plate into a water bath where it was instantaneously cut to pellets by a rotating knife. The polymer pellets were dried. The pelletised polymer had $MFR_2$ of 9.0 g/10 min and density 960 $kg/m^3$.

Example 2:

A dry blend of pellets was made of 200 kg of the polymer prepared according to the Example 1 and of 200 kg of the low density polyethylene (LDPE) CA8200 (manufactured and marketed by Borealis), which is produced by free radical polymerisation in a high pressure autoclave process. CA8200 has a melt index $MFR_2$ of 7.5 g/10 min, a $SHI_{0/100}$ of 13.0 and a density of 920 $kg/m^3$. It is low density polyethylene designed for extrusion coating and is manufactured by Borealis. This dry blend was then compounded and pelletised by using the above mentioned ZSK70 extruder. The melt temperature during the extrusion was 200 °C. The resulting polymer composition had $MFR_2$ of 5,9g/10min and a density of 940 $kg/m^3$. Properties of the composition are shown in Table 1.

Example 3:

The procedure of Example 2 was repeated, except that the amount of polymer prepared according to Example 1 was 600 kg and the amount of CA8200 was 400 kg. Properties of the composition are shown in Table 1.

Example 4.

The procedure of Example 2 was repeated, except that the amount of polymer prepared according to Example 1 was 400 kg and the amount of CA8200 was 600 kg. Properties of the composition are shown in Table 1.

Comparative Example 1:

A unimodal high density polyethylene, having an $MFR_2$ of 12 g/10min and a density of 964 kg/m$^3$ was produced by polymerising ethylene in the presence of a Ziegler-Natta catalyst in a gas phase polymerisation reactor. A portion of this polymer was blended with a low density polyethylene having an $MFR_2$ of 4.5 g/10min and a density of 922 kg/m$^3$ and which has produced in polymerising ethylene in a free radical process in a tubular reactor. The blend contained 52 % of the HDPE and 48 % of the LDPE and had an $MFR_2$ of 7.5 g/10min and a density of 941 kg/m$^3$.

Table 1: Properties of the polymer compositions.

| Polymer | MFR2 g/10 min | Density kg/m' | Crystallinity % | η 1kPa Pa.s | SHI$_{1/100}$ |
|---|---|---|---|---|---|
| Example 2 | 5.9 | 940.0 | 52.8 | 2270 | 12.2 |
| Example 3 | 6.3 | 944.0 | 58.7 | 2120 | 11.6 |
| Example 4 | 6.2 | 936.2 | 50.9 | 2270 | 14.6 |
| Comparative Example 1 | 7.3 | 944.5 | 57.3 | 2130 | 10.1 |

Example 5:

The polymer compositions prepared according to Examples 2 to 4 and Comparative Example 1 were used in extrusion coating. The coating was done on a Beloit pilot extrusion coating line with two 4,5" extruders having an L/D ratio (length to diameter) of 24 and output with LDPE of 450 kg/h and one 2.5" extruder having an L/D ratio of 30 and output with LDPE of 170 kg/h. The die was a Peter Cloeren die with a five-layer feed block. The temperature of the polymer melt at the die was 310 °C.

The substrate was UG Kraft paper having a basis weight of 70 g/m$^2$. The speed of the coating line was incrementally increased from 100 m/min until it reached 400 m/min. The coating weight was varied from 30 g/m$^2$ to 5 g/m$^2$.

Table 2 shows the resistance of the compositions against draw resonance at 400 m/min draw down speed and 10 g/m$^2$ coating weight.

Table 2: Draw resonance, edge weaving and minimum coating weight of the compositions.

| Polymer | Draw resonance g/m$^2$ | Edge weaving mm | Minimum Coating weight g/m$^2$ |
|---|---|---|---|
| Example 2 | 0.9 | 7 | 7 |
| Example 3 | - | 15 | 10 |
| Example 4 | 0.7 | 5 | 7 |
| Comparative Example 1 | 0.4 | 3 | 5 |

The neck-in of the compositions was measured at 200 m/min draw down speed and 10 g/m$^2$ coating weight. The results are shown in Table 3.

Table 3: Neck-in of the compositions

| Polymer | Neck-in mm |
|---|---|
| Example 2 | 107 |
| Example 3 | 126 |
| Example 4 | 95 |
| Comparative Example 1 | 141 |

The WVTR of the coating was measured for Example 2 and Comparative Example 1 for coating weight of 20 g/m$^2$. The results are shown in Table 4.

Table 4: WVTR at 38 °C and relative humidity of 90 %.

| Polymer | WVTR g/m$^2$/24h |
|---|---|
| Example 2 | 14.3 |
| Comparative Example 1 | 15.5 |

**Claims**

1. A polymer composition comprising

   a) a multimodal high density polyethylene (A) having a density of 950 to 968 kg/m$^3$ ; and
   b) a low density polyethylene (B)

   wherein
   the composition has a density, according to ISO 1183-1987, of 930 to 950 kg/m$^3$.

2. A composition according to claim 1 **characterized in that** the composition has a MFR$_2$, according to ISO 1133, at 190 °C, of 5 to 20 g/10min.

3. A composition according to any one of the preceding claims **characterized in that** the polyethylene (A) has a melt flow rate MFR$_2$, according to ISO 1133, at 190 °C, of 5 to 20 g/10 min.

4. A composition according to any one of the preceding claims **characterized in that** the polyethylene (A) has a weight average molecular weight M$_w$ of 50000 to 150000 g/mol.

5. A composition as claimed in any one of the preceding claims wherein the polyethylene (A) is bimodal.

6. A composition according to any one of the preceding claims **characterized in that** the polyethylene (A) comprises ethylene homopolymer and/or ethylene copolymer.

7. A composition according to claim 6 **characterized in that** the ethylene copolymer comprises ethylene and at least one C$_3$ to C$_{20}$ $\alpha$-olefin.

8. A composition according to any one of the preceding claims **characterized in that** the comonomer content in the polyethylene (A) is 0.1 to 1.0 % by mole.

9. A composition according to any one of the preceding claims **characterized in that** the polyethylene (A) comprises a low molecular weight fraction (LMW) and a high molecular weight fraction (HMW).

10. A composition according to claim 9 **characterized in that** the polyethylene (A) comprises 40 to 60 % by weight of the low molecular weight fraction (LMW).

11. A composition according to claim 9 or 10 **characterized in that** the low molecular weight fraction (LMW) is a homopolymer.

12. A composition according to any one of the preceding claims 9 to 11 **characterized in that** the comonomer content is lower than 0.2 % by mole in the low molecular weight fraction (LMW).

13. A composition according to any one of the preceding claims 9 to 12 **characterized in that** the low molecular weight fraction (LMW) has a density, according to ISO 1183-1987, of at least 973 kg/m$^3$.

14. A composition according to any one of the preceding claims 9 to 13 **characterized in that** the low molecular weight fraction (LMW) has a melt flow rate MFR$_2$, according to ISO 1133, at 190 °C, of 100 to 2000 g/10 min.

15. A composition according to any one of the preceding claims 9 to 14 **characterized in that** the low molecular weight fraction (LMW) has a weight average molecular weight M$_w$ of 10000 to 60000 g/mol.

**16.** A composition according to any one of the preceding claims 9 to 15 **characterized in that** the high molecular weight fraction (HMW) is an ethylene copolymer.

**17.** A composition according to claim 16 **characterized in that** the ethylene copolymer comprises ethylene and at least one $C_3$ to $C_{20}$ $\alpha$-olefine.

**18.** A composition according to any one of the preceding claims 16 to 17 **characterized in that** the comonomer content in the high molecular weight fraction (HMW) is 0.2 to 2.0 % by mole.

**19.** A composition according to any one of the preceding claims 16 to 18 **characterized in that** the high molecular weight fraction (HMW) has a weight average molecular weight $M_w$ of 80000 to 300000 g/mol.

**20.** A composition according to any one of the preceding claims **characterized in that** the polyethylene (B) is long chain branched.

**21.** A composition according to any one of the preceding claims **characterized in that** the polyethylene (B) has a density, according to ISO 1183-1987, of 910 to 935 kg/m$^3$.

**22.** A composition according to any one of the preceding claims **characterized in that** the polyethylene (B) has a melt flow rate $MFR_2$, according to ISO 1133, at 190 °C, of 3 to 15 g/10 min.

**23.** A composition according to any one of the preceding claims **characterized in that** the polyethylene (B) is a ethylene copolymer.

**24.** A composition according to claim 23 **characterized in that** the ethylene copolymer comprises ethylene and at least one component selected from the group consisting of vinyl acetate, vinyl acrylate, vinyl methacrylate, ethyl acrylate, methyl acrylate and butyl acrylate.

**25.** A composition according to any one of the preceding claims **characterized in that** the composition comprises 40 to 99 % by weight polyethylene (A) and 1 to 60 % by weight polyethylene (B).

**26.** A composition according to any one of the preceding claims **characterized in that** that the composition comprises additionally

    c) other polymer(s) up to 20 % by weight.

**27.** A composition according to any one of the preceding claims **characterized in that** that the composition comprises additionally

    d) antioxidant(s) and/or process stabilizers of less than 2000 ppm.

**28.** A coating having a coating weight of 20g/m$^2$ made of the composition as claimed in any one of the preceding claims wherein the coating has a vapor transmission rate (WVTR), according to ASTM E96, of less than 15.5 g/m$^2$/24h.

**29.** A multi-layer material comprising

    a) a substrate as a first layer
    b) a polymer composition according to any one of the claims 1 to 27 as at least a further layer.

**30.** A multi-layer material according to claim 29 **characterized in that** the substrate is selected from the group consisting of paper, paperboard, aluminum film and plastic film.

**31.** A process for producing a composition according to any one of the claims 1 to 27 **characterized in that**

    a) the polyethylene (A) is produced in a multistage process comprising a loop reactor and a gas phase reactor, wherein the low molecular weight fraction is generated in at least one loop reactor and the high molecular weight fraction is generated in a gas phase reactor
    b) the polyethylene (B) is produced by a free radical polymerization in a high pressure autoclave process

**EP 1 555 292 B1**

c) polyethylene (A) and polyethylene (B) are blended together and compounded by using an extruder.

**32.** A process according to claim 31 **characterized in that** the catalyst used for the process producing the polyethylene (A) is a high activity pro-catalyst comprising a particulate inorganic support, a chlorine compound deposited on the support, wherein the chlorine compound is the same as or different from the titanium compound, whereby the inorganic support is contacted with an alkyl metal chloride which is soluble in non-polar hydrocarbon solvents, and has the formula $(R_nMeCl_{3-n})_m$ wherein R is a $C_1$-$C_{20}$ alkyl group, Me is a metal of group III(13) of the periodic table, n = 1 or 2 and m = 1 or 2, to give a first reaction product, and the first reaction product is contacted with a compound containing hydrocarbyl and hydrocarbyl oxide linked to magnesium which is soluble in non-polar hydrocarbon solvents, to give a second reaction product, and the second reaction product is contacted with a titanium compound which contains chlorine, having the formula $Cl_xTi(OR^{IV})_{4-x}$ wherein $R^{IV}$ is a $C_2$-$C_{20}$ hydrocarbyl group and x is 3 or 4, to give the pro-catalyst.

**33.** A process for producing a multi-layer material according to any one of the claims 29 to 30 **characterized in that** polymer composition according to any one of the claims 1 to 27 is applied on the substrate by a film coating line comprising an unwind, a wind, a chill roll and a coating die.

**34.** Use of the polymer composition according to any one of the claims 1 to 27 for extrusion coating.

**35.** Use according to claim 34 **characterized in that** the polymer composition is used for extrusion coating producing a multi-layer material.

**Patentansprüche**

**1.** Polymerzusammensetzung, umfassend

a) ein multimodales Polyethylen (A) mit hoher Dichte, das eine Dichte von 950 bis 968 kg/m³ hat; und

b) ein Polyethylen (B) mit niedriger Dichte,

wobei
die Zusammensetzung eine Dichte gemäß ISO 1183-1987 von 930 bis 950 kg/m³ hat.

**2.** Zusammensetzung nach Anspruch 1, **dadurch gekennzeichnet, dass** die Zusammensetzung einen $MFR_2$ gemäß ISO 1133 bei 190 °C von 5 bis 20 g/10 min hat.

**3.** Zusammensetzung nach einem der vorhergehenden Ansprüche, **dadurch gekennzeichnet, dass** das Polyethylen (A) einen Schmelzflussindex $MFR_2$ gemäß ISO 1133 bei 190 °C von 5 bis 20 g/10 min hat.

**4.** Zusammensetzung nach einem der vorhergehenden Ansprüche, **dadurch gekennzeichnet, dass** das Polyethylen (A) ein Gewichtsmittel des Molekulargewichts $M_w$ von 50.000 bis 150.000 g/mol hat.

**5.** Zusammensetzung nach einem der vorhergehenden Ansprüche, wobei das Polyethylen (A) bimodal ist.

**6.** Zusammensetzung nach einem der vorhergehenden Ansprüche, **dadurch gekennzeichnet, dass** das Polyethylen (A) ein Ethylenhomopolymer und/oder Ethylencopolymer ist.

**7.** Zusammensetzung nach Anspruch 6, **dadurch gekennzeichnet, dass** das Ethylencopolymer Ethylen und zumindest ein $C_3$ bis $C_{20}$ $\alpha$-Olefin umfasst.

**8.** Zusammensetzung nach einem der vorhergehenden Ansprüche, **dadurch gekennzeichnet, dass** der Comonomergehalt in dem Polyethylen (A) 0,1 bis 1,0 Mol-% ist.

**9.** Zusammensetzung nach einem der vorhergehenden Ansprüche, **dadurch gekennzeichnet, dass** das Polyethylen (A) eine Fraktion mit niedrigem Molekulargewicht (LMW) und eine Fraktion mit hohem Molekulargewicht (HMW) umfasst.

**10.** Zusammensetzung nach Anspruch 9, **dadurch gekennzeichnet, dass** das Polyethylen (A) 40 bis 60 Gew.-% der Fraktion mit niedrigem Molekulargewicht (LMW) umfasst.

**11.** Zusammensetzung nach Anspruch 9 oder 10, **dadurch gekennzeichnet, dass** die Fraktion mit niedrigem Molekulargewicht (LMW) ein Homopolymer ist.

**12.** Zusammensetzung nach einem der vorhergehenden Ansprüche 9 bis 11, **dadurch gekennzeichnet, dass** in der Fraktion mit niedrigem Molekulargewicht (LMW) der Comonomergehalt niedriger als 0,2 Mol-% ist.

**13.** Zusammensetzung nach einem der vorhergehenden Ansprüche 9 bis 12, **dadurch gekennzeichnet, dass** die Fraktion mit niedrigen Molekulargewicht (LMW) eine Dichte gemäß ISO 1183-1987 von mindestens 973 kg/m$^3$ hat.

**14.** Zusammensetzung nach einem der vorhergehenden Ansprüche 9 bis 13, **dadurch gekennzeichnet, dass** die Fraktion mit niedrigen Molekulargewicht (LMW) einen Schmelzflussindex $MFR_2$ gemäß ISO 1133 bei 190 °C von 100 bis 2000 g/10 min hat.

**15.** Zusammensetzung nach einem der vorhergehenden Ansprüche 9 bis 14, **dadurch gekennzeichnet, dass** die Fraktion mit niedrigen Molekulargewicht (LMW) ein Gewichtsmittel des Molekulargewichts $M_w$ von 10.000 bis 60.000 g/mol hat.

**16.** Zusammensetzung nach einem der vorhergehenden Ansprüche 9 bis 15, **dadurch gekennzeichnet, dass** die Fraktion mit hohem Molekulargewicht (HMW) ein Ethylencopolymer ist.

**17.** Zusammensetzung nach Anspruch 16, **dadurch gekennzeichnet, dass** das Ethylencopolymer Ethylen und zumindest ein $C_3$ bis $C_{20}$ $\alpha$-Olefin umfasst.

**18.** Zusammensetzung nach einem der vorhergehenden Ansprüche 16 bis 17, **dadurch gekennzeichnet, dass** der Comonomergehalt in der Fraktion mit hohem Molekulargewicht (HMW) 0,2 bis 2,0 Mol-% ist.

**19.** Zusammensetzung nach einem der vorhergehenden Ansprüche 16 bis 18, **dadurch gekennzeichnet, dass** die Fraktion mit hohem Molekulargewicht (HMW) ein Gewichtsmittel des Molekulargewichts $M_w$ von 80.000 bis 300.000 g/mol hat.

**20.** Zusammensetzung nach einem der vorhergehenden Ansprüche, **dadurch gekennzeichnet, dass** das Polyethylen (B) langkettig verzweigt ist.

**21.** Zusammensetzung nach einem der vorhergehenden Ansprüche, **dadurch gekennzeichnet, dass** das Polyethylen (B) eine Dichte gemäß ISO 1183-1987 von 910 bis 935 kg/m$^3$ hat.

**22.** Zusammensetzung nach einem der vorhergehenden Ansprüche, **dadurch gekennzeichnet, dass** das Polyethylen (B) einen Schmelzflussindex $MFR_2$ gemäß ISO 1133 bei 190 °C von 3 bis 15 g/10 min hat.

**23.** Zusammensetzung nach einem der vorhergehenden Ansprüche, **dadurch gekennzeichnet, dass** das Polyethylen (B) ein Ethylencopolymer ist.

**24.** Zusammensetzung nach Anspruch 23, **dadurch gekennzeichnet, dass** das Ethylencopolymer Ethylen und mindestens einen Bestandteil umfasst, der aus der Gruppe ausgewählt ist, bestehend aus Vinylacetat, Vinylacrylat, Vinylmethacrylat, Ethylacrylat, Methylacrylat und Butylacrylat.

**25.** Zusammensetzung nach einem der vorhergehenden Ansprüche, **dadurch gekennzeichnet, dass** die Zusammensetzung 40 bis 99 Gew.-% Polyethylen (A) und 1 bis 60 Gew.-% Polyethylen (B) umfasst.

**26.** Zusammensetzung nach einem der vorhergehenden Ansprüche, **dadurch gekennzeichnet, dass** die Zusammensetzung zusätzlich

c) bis 20 Gew.-% andere(s) Polymer(e) umfasst.

**27.** Zusammensetzung nach einem der vorhergehenden Ansprüche, **dadurch gekennzeichnet, dass** die Zusammensetzung zusätzlich

d) weniger als 2000 ppm Antioxidans(zien) und/oder Verfahrensstabilisatoren umfasst.

28. Beschichtung, die ein Beschichtungsgewicht von 20 g/m$^2$ hat und die aus der Zusammensetzung nach einem der vorhergehenden Ansprüche hergestellt ist, wobei die Beschichtung eine Dampfdurchlässigkeitsrate (WVTR) gemäß ASTM E96 von weniger als 15,5 g/m$^2$/24 h hat.

29. Mehrschichtmaterial, umfassend

a) ein Substrat als eine erste Schicht
b) eine Polymerzusammensetzung nach einem der Ansprüche 1 bis 27 als mindestens eine weitere Schicht.

30. Mehrschichtmaterial nach Anspruch 29, **dadurch gekennzeichnet, dass** das Substrat aus der Gruppe ausgewählt ist, die aus Papier, Pappe, Aluminiumfolie und Plastikfolie besteht.

31. Verfahren zur Herstellung einer Zusammensetzung nach einem der Ansprüche 1 bis 27, **dadurch gekennzeichnet, dass**

a) das Polyethylen (A) in einem mehrstufigen Verfahren hergestellt wird, umfassend einen Schlaufenreaktor und einen Gasphasenreaktor, wobei die Fraktion mit niedrigem Molekulargewicht in mindestens einem Schlaufenreaktor hergestellt wird und die Fraktion mit hohem Molekulargewicht in einem Gasphasenreaktor hergestellt wird
b) das Polyethylen (B) durch eine freie radikalische Polymerisation in einem Hochdruckautoklavenverfahren hergestellt wird
c) das Polyethylen (A) und Polyethylen (B) unter Verwendung eines Extruders zusammengemischt und compoundiert werden.

32. Verfahren nach Anspruch 31, **dadurch gekennzeichnet, dass** der Katalysator, der für das Verfahren zur Herstellung des Polyethylens (A) verwendet wird, ein hochaktiver Pro-Katalysator ist, der einen partikulären anorganischen Träger umfasst, wobei eine Chlorverbindung auf dem Träger aufbracht ist, wobei die Chlorverbindung gleich oder verschieden zu der Titanverbindung ist, wobei
der anorganische Träger mit einem Alkylmetallchlorid in Kontakt gebracht wird, das in unpolaren Kohlenwasserstofflösungsmitteln löslich ist und die Formel $(R_nMeCl_{3-n})_m$ hat, worin R eine $C_1$-$C_{20}$ Alkylgruppe ist, Me ein Metall der Gruppe III(13) des Periodensystems ist, n = 1 oder 2 und m = 1 oder 2 ist, um ein erstes Reaktionsprodukt zu ergeben, und
das erste Reaktionsprodukt mit einer Verbindung in Kontakt gebracht wird, die Hydrocarbyl und Hydrocarbyloxid enthält, verbunden mit Magnesium, und die in unpolaren Kohlenwasserstofflösungsmitteln löslich ist, um ein zweites Reaktionsprodukt zu ergeben, und das zweite Reaktionsprodukt wird mit einer Titanverbindung in Kontakt gebracht, die Chlor enthält und die Formel $Cl_xTi(OR^{IV})_{4-x}$ hat, worin $R^{IV}$ eine $C_2$-$C_{20}$ Hydrocarbylgruppe und x 3 oder 4 ist, um den Pro-Katalysator zu ergeben.

33. Verfahren zur Herstellung eines Mehrschichtmaterials nach einem der Ansprüche 29 bis 30, **dadurch gekennzeichnet, dass** die Polymerzusammensetzung nach einem der Ansprüche 1 bis 27 auf ein Substrat mittels einer Folienbeschichtungsanlage aufgebracht wird, die eine Abwicklungsvorrichtung, eine Wicklungsvorrichtung, eine Kühlrolle und eine Beschichtungsdüse [Engl.: coating die] umfasst.

34. Verwendung der Polymerzusammensetzung nach einem der Ansprüche 1 bis 27 zur Extrusionsbeschichtung.

35. Verwendung nach Anspruch 34, **dadurch gekennzeichnet**, das die Polymerzusammensetzung zur Extrusionsbeschichtung verwendet wird, um ein Mehrschichtmaterial herzustellen.

**Revendications**

1. Composition de polymère comprenant

a) un polyéthylène haute densité multimode (A) ayant une masse volumique de 950 à 968 kg/m$^3$ ; et

b) un polyéthylène basse densité (B)

où
la composition a une masse volumique, selon l'ISO 1183-1987, de 930 à 950 kg/m$^3$.

**2.** Composition selon la revendication 1 **caractérisée en ce que** la composition a un MFR$_2$, selon l'ISO 1133, à 190 °C, de 5 à 20 g/10min.

**3.** Composition selon l'une quelconque des revendications précédentes **caractérisée en ce que** le polyéthylène (A) a un indice de fluidité MFR$_2$, selon l'ISO 1133, à 190 °C, de 5 à 20 g/10 min.

**4.** Composition selon l'une quelconque des revendications précédentes **caractérisée en ce que** le polyéthylène (A) a un poids moléculaire moyen en poids M$_w$ de 50000 à 150000 g/mol.

**5.** Composition selon l'une quelconque des revendications précédentes dans laquelle le polyéthylène (A) est bimode.

**6.** Composition selon l'une quelconque des revendications précédentes **caractérisée en ce que** le polyéthylène (A) comprend un homopolymère d'éthylène et/ou un copolymère d'éthylène.

**7.** Composition selon la revendication 6 **caractérisée en ce que** le copolymère d'éthylène comprend de l'éthylène et au moins une $\alpha$-oléfine en C$_3$ à C$_{20}$.

**8.** Composition selon l'une quelconque des revendications précédentes **caractérisée en ce que** la teneur en comonomère dans le polyéthylène (A) est de 0,1 à 1,0 % en mole.

**9.** Composition selon l'une quelconque des revendications précédentes **caractérisée en ce que** le polyéthylène (A) comprend une fraction de poids moléculaire faible (LMW) et une fraction de poids moléculaire élevé (HMW).

**10.** Composition selon la revendication 9 **caractérisée en ce que** le polyéthylène (A) comprend 40 à 60 % en poids de la fraction de poids moléculaire faible (LMW).

**11.** Composition selon la revendication 9 ou 10 **caractérisée en ce que** la fraction de poids moléculaire faible (LMW) est un homopolymère.

**12.** Composition selon l'une quelconque des revendications précédentes 9 à 11 **caractérisée en ce que** la teneur en comonomère est inférieure à 0,2 % en mole dans la fraction de poids moléculaire faible (LMW).

**13.** Composition selon l'une quelconque des revendications précédentes 9 à 12 **caractérisée en ce que** la fraction de poids moléculaire faible (LMW) a une masse volumique, selon l'ISO 1183-1987, d'au moins 973 kg/m$^3$.

**14.** Composition selon l'une quelconque des revendications précédentes 9 à 13 **caractérisée en ce que** la fraction de poids moléculaire faible (LMW) a un indice de fluidité MFR$_2$, selon l'ISO 1133, à 190 °C, de 100 à 2000 g/10 min.

**15.** Composition selon l'une quelconque des revendications précédentes 9 à 14 **caractérisée en ce que** la fraction de poids moléculaire faible (LMW) a un poids moléculaire moyen en poids M$_w$ de 10000 à 60000 g/mol.

**16.** Composition selon l'une quelconque des revendications précédentes 9 à 15 **caractérisée en ce que** la fraction de poids moléculaire élevé (HMW) est un copolymère d'éthylène.

**17.** Composition selon la revendication 16 **caractérisée en ce que** le copolymère d'éthylène comprend de l'éthylène et au moins une $\alpha$-oléfine en C$_3$ à C$_{20}$.

**18.** Composition selon l'une quelconque des revendications précédentes 16 à 17 **caractérisée en ce que** la teneur en comonomère dans la fraction de poids moléculaire élevé (HMW) est de 0,2 à 2,0 % en mole.

**19.** Composition selon l'une quelconque des revendications précédentes 16 à 18 **caractérisée en ce que** la fraction de poids moléculaire élevé (HMW) a un poids moléculaire moyen en poids M$_w$ de 80000 à 300000 g/mol.

**20.** Composition selon l'une quelconque des revendications précédentes **caractérisée en ce que** le polyéthylène (B) est ramifié à chaîne longue.

**21.** Composition selon l'une quelconque des revendications précédentes **caractérisée en ce que** le polyéthylène (B) a une masse volumique, selon l'ISO 1183-1987, de 910 à 935 kg/m$^3$.

**22.** Composition selon l'une quelconque des revendications précédentes **caractérisée en ce que** le polyéthylène (B) a un indice de fluidité MFR$_2$, selon l'ISO 1133, à 190 °C, de 3 à 15 g/10 min.

**23.** Composition selon l'une quelconque des revendications précédentes **caractérisée en ce que** le polyéthylène (B) est un copolymère d'éthylène.

**24.** Composition selon la revendication 23 **caractérisée en ce que** le copolymère d'éthylène comprend de l'éthylène et au moins un composant choisi dans le groupe constitué de l'acétate de vinyle, l'acrylate de vinyle, le méthacrylate de vinyle, l'acrylate d'éthyle, l'acrylate de méthyle et l'acrylate de butyle.

**25.** Composition selon l'une quelconque des revendications précédentes **caractérisée en ce que** la composition comprend 40 à 99 % en poids de polyéthylène (A) et 1 à 60 % en poids de polyéthylène (B).

**26.** Composition selon l'une quelconque des revendications précédentes **caractérisée en ce que** la composition comprend en outre c) d'autre(s) polymère(s) jusqu'à 20 % en poids.

**27.** Composition selon l'une quelconque des revendications précédentes **caractérisée en ce que** la composition comprend en outre d) un ou des antioxydant(s) et/ou stabilisants de traitement à moins de 2000 ppm.

**28.** Revêtement ayant un poids de revêtement de 20 g/m$^2$ constitué de la composition selon l'une quelconque des revendications précédentes où le revêtement a un taux de transmission de vapeur (WVTR), selon l'ASTM E96, inférieur à 15,5 g/m$^2$/24h.

**29.** Matériau multicouche comprenant

      a) un substrat en tant que première couche
      b) une composition de polymère selon l'une quelconque des revendications 1 à 27 en tant qu'au moins une couche supplémentaire.

**30.** Matériau multicouche selon la revendication 29 **caractérisé en ce que** le substrat est choisi dans le groupe constitué de papier, de carton, de film d'aluminium et de film plastique.

**31.** Procédé de production d'une composition selon l'une quelconque des revendications 1 à 27 **caractérisé en ce que**

      a) le polyéthylène (A) est produit dans un procédé à étages multiples comprenant un réacteur en boucle et un réacteur en phase gazeuse, où la fraction de poids moléculaire faible est générée dans au moins un réacteur en boucle et la fraction de poids moléculaire élevée est générée dans un réacteur en phase gazeuse
      b) le polyéthylène (B) est produit par une polymérisation radicalaire dans un procédé en autoclave à haute pression
      c) le polyéthylène (A) et le polyéthylène (B) sont mélangés conjointement et combinés en utilisant une extrudeuse.

**32.** Procédé selon la revendication 31 **caractérisé en ce que** le catalyseur utilisé pour procédé de production du polyéthylène (A) est un procatalyseur à activité élevée comprenant un support inorganique particulaire, un composé chloré déposé sur le support, où le composé chloré est identique à ou différent du composé de titane, dans lequel le support inorganique est mis en contact avec un chlorure d'alkyl-métal qui est soluble dans des solvants hydrocarbures non polaires, et présente la formule $(R_nMeCl_{3-n})_m$ où R est un groupe alkyle en C$_1$-C$_{20}$, Me est un métal du groupe III(13) de la table périodique, n = 1 ou 2 et m = 1 ou 2, pour obtenir un premier produit de réaction, et le premier produit de réaction est mis en contact avec un composé contenant un hydrocarbyle et un oxyde d'hydrocarbyle lié au magnésium qui est soluble dans des solvants hydrocarbures non polaires, pour obtenir un deuxième produit de réaction, et le deuxième produit de réaction est mise en contact avec un composé de titane qui contient du chlore, ayant la formule $Cl_xTi(OR^{IV})_{4-x}$ où R$^{IV}$ est un groupe hydrocarbyle en C$_2$-C$_{20}$ et x est 3 ou 4, pour obtenir le procatalyseur.

**33.** Procédé de production d'un matériau multicouche selon l'une quelconque des revendications 29 à 30 **caractérisé en ce que** la composition de polymère selon l'une quelconque des revendications 1 à 27 est appliquée sur le substrat par une ligne de revêtement de film comprenant un dérouleur, un enrouleur, un rouleau refroidisseur et une filière de revêtement.

**34.** Utilisation de la composition de polymère selon l'une quelconque des revendications 1 à 27 pour enduction par extrusion.

**35.** Utilisation selon la revendication 34 **caractérisée en ce que** la composition de polymère est utilisée pour la production par enduction par extrusion d'un matériau multicouche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9830628 A
- EP 792318 A
- WO 0071615 A
- WO 0162847 A
- US 6582795 B
- WO 9212182 A
- WO 9722633 A
- WO 9618662 A
- EP 0688794 B1
- US 2897183 A
- EP 688794 B

**Non-patent literature cited in the description**

- **CHRISTOPHER W.** RHEOLOGY, Principles, Measurements and Applications. VCH, 1994